(19) Europäisches Patentamt
European Patent Office
Office européen des brevets

(11)  EP 4 760 431 A1

(12)  EUROPEAN PATENT APPLICATION
published in accordance with Art. 153(4) EPC

(43) Date of publication:
17.06.2026  Bulletin 2026/25

(51) International Patent Classification (IPC):
G05B 23/02 (2006.01)   H01M 4/139 (2010.01)

(21) Application number: 24898046.8

(22) Date of filing: 25.11.2024

(52) Cooperative Patent Classification (CPC):
G05B 23/02; H01M 4/139; Y02E 60/10

(86) International application number:
PCT/KR2024/018720

(87) International publication number:
WO 2025/116451 (05.06.2025 Gazette 2025/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  28.11.2023  KR 20230167381
08.08.2024  KR 20240105841

(71) Applicant: LG Energy Solution, Ltd.
Seoul 07335 (KR)

(72) Inventors:
• BYUN, Eun Seok
Daejeon 34122 (KR)
• KIM, Si Ho
Daejeon 34122 (KR)
• YOU, Jung Seok
Daejeon 34122 (KR)
• KIM, Beom Soo
Daejeon 34122 (KR)

(74) Representative: BCKIP Part mbB
Landsberger Straße 98
80339 München (DE)

(54)  **FAILURE PREDICTION MODEL GENERATION METHOD, MONITORING METHOD, AND BATTERY MANUFACTURING METHOD**

(57)     The present technology provides a monitoring method including generating a failure prediction model for production equipment, and monitoring the production equipment based on the failure prediction model, in which the generating of the failure prediction model includes generating frequency domain data by processing time domain vibration data through frequency analysis, the time domain vibration data being transmitted from a vibration sensor in the production equipment, generating frequency domain-of-interest data by extracting data corresponding to a component-specific frequency band of interest from the frequency domain data, generating production process-related data by determining a filtering section satisfying a process condition of the production equipment and extracting data corresponding to the filtering section from the frequency domain-of-interest data, and generating index data by standardizing the production process-related data.

[FIG. 4]

```
                    ┌──────────┐
                    │  START   │
                    └────┬─────┘
                         │
  ┌──────────────────────────────────────────────┐
  │      OBTAIN TIME DOMAIN VIBRATION DATA        │──── S110
  └──────────────────────┬───────────────────────┘
  ┌──────────────────────────────────────────────┐
  │   GENERATE FREQUENCY DOMAIN DATA FROM TIME    │──── S120
  │ DOMAIN VIBRATION DATA THROUGH FREQUENCY ANALYSIS │
  └──────────────────────┬───────────────────────┘
  ┌──────────────────────────────────────────────┐
  │ EXTRACT DATA CORRESPONDING TO COMPONENT-SPECIFIC │
  │ FREQUENCY BAND OF INTEREST FROM FREQUENCY DOMAIN DATA, │──── S130
  │  AND PROCESS EXTRACTED DATA THROUGH RMS ANALYSIS │
  │   TO GENERATE FREQUENCY DOMAIN-OF-INTEREST DATA │
  └──────────────────────┬───────────────────────┘
  ┌──────────────────────────────────────────────┐
  │  DETERMINE FILTERING SECTION AND WINDOW BASED ON │
  │ PROCESS CONDITIONS OF PRODUCTION EQUIPMENT, EXTRACT │
  │   DATA CORRESPONDING TO FILTERING SECTION FROM FREQUENCY │──── S140
  │  DOMAIN-OF-INTEREST DATA, AND CALCULATE AVERAGES OF │
  │   EXTRACTED DATA IN UNITS OF WINDOW TO GENERATE │
  │        PRODUCTION PROCESS-RELATED DATA        │
  └──────────────────────┬───────────────────────┘
  ┌──────────────────────────────────────────────┐
  │  GENERATE INDEX DATA BY STANDARDIZING PRODUCTION │
  │    PROCESS-RELATED DATA BASED ON NORMAL       │──── S150
  │   OPERATION STATE OF PRODUCTION EQUIPMENT     │
  └──────────────────────┬───────────────────────┘
  ┌──────────────────────────────────────────────┐
  │          DETERMINE CONTROL LIMIT              │──── S160
  └──────────────────────┬───────────────────────┘
                    ┌────┴─────┐
                    │   END    │
                    └──────────┘
```

**Description**

[Technical Field]

The present invention relates to failure prediction model generating method, a monitoring method, and a battery manufacturing method, and more specifically, to a failure prediction model generating method of predicting a failure of equipment based on vibration data, a monitoring method including the failure prediction model generating method, and a battery manufacturing method including the failure prediction model generating method.

The present application claims the benefit of priority based on Korean Patent Application No. 10-2023-0167381, filed on November 28, 2023 and Korean Patent Application No. 10-2024-0105841, filed on August 8, 2024, and the entire contents of the Korean patent applications are incorporated herein by reference.

[Background Art]

Methods of monitoring a failure of equipment include a method of setting a control limit (or threshold) based on data obtained at a low sampling rate and generating failure notification when a value detected by the equipment exceeds the control limit. However, the equipment includes various components related to each other and there are various factors indicating states of the equipment, and thus, it is difficult to detect whether each of the components is broken.

[Disclosure]

[Technical Problem]

The present invention is directed to providing a failure prediction model generating method.

The present invention is directed to providing a monitoring method including the failure prediction model generating method.

The present invention is directed to providing a battery manufacturing method including the failure prediction model generating method.

[Technical Solution]

An aspect of the present invention provides a monitoring method including generating a failure prediction model for production equipment, and monitoring the production equipment based on the failure prediction model, in which the generating of the failure prediction model includes generating frequency domain data by processing time domain vibration data through frequency analysis, the time domain vibration data being transmitted from a vibration sensor in the production equipment, generating frequency domain-of-interest data by extracting data corresponding to a component-specific frequency band of interest from the frequency domain data, generating production process-related data by determining a filtering section satisfying a process condition of the production equipment and extracting data corresponding to the filtering section from the frequency domain-of-interest data, and generating index data by standardizing the production process-related data.

In example embodiments, the frequency domain data may be generated by processing time domain acceleration data or time domain velocity data through Fast Fourier Transform.

In example embodiments, the frequency domain-of-interest data is generated by extracting data corresponding to a component-specific frequency band of interest from the frequency domain data and calculating a statistic using a root mean square of the extracted data.

In example embodiments, the filtering section may be determined as a section in which revolutions per minute of a component of the production equipment is in a target range.

In example embodiments, the production process-related data may be generated by extracting data corresponding to the filtering section from the frequency domain-of-interest data and calculating averages of the extracted data in units of a window determined based on another process condition of the production equipment.

In example embodiments, the window may be determined as a time period in which a set of articles are processed by the production equipment.

In example embodiments, the generating of the index data may include calculating a Z-score for the production process-related data.

In example embodiments, the monitoring method may further include determining a control limit serving as a criterion for judging whether the production equipment is broken, based on the index data.

In example embodiments, the monitoring method may further include evaluating the failure prediction model after the generating of the failure prediction model.

In example embodiments, the vibration sensor may be an acceleration sensor.

In example embodiments, the production equipment may include a mixer configured to manufacture an electrode slurry for a secondary battery.

In example embodiments, the mixer may be configured to stir materials of the electrode slurry, the mixer may be configured to perform a first stirring process of rotating a stirring blade at a first stirring speed to stir the materials and a second stirring process of rotating the stirring blade at a second stirring speed higher than the first stirring speed to stir the materials, and the filtering section may be determined as a section in which the mixer performs the second stirring process.

An aspect of the present invention provides a method of generating a failure prediction model for production equipment, the method including: generating frequency domain data by processing time domain vibration data through frequency analysis, the time domain vibration data being transmitted from a vibration sensor in the production equipment; generating frequency domain-of-interest data by extracting data corresponding to a component-specific frequency band of interest from the frequency domain data and calculating a statistic using a root mean square of the extracted data; generating production process-related data by extracting data corresponding to a filtering section from the frequency domain-of-interest data and calculating averages of the extracted data in units of a window, in which the filtering section is determined based on a process condition of the production equipment and the window is determined based on another process condition of the production equipment; generating index data by calculating a standard score for the production process-related data; and determining a control limit serving as a criterion for judging whether the production equipment is broken, based on the index data.

In example embodiments, the filtering section may be determined as a section in which revolutions per minute of a component of the production equipment is in a target range.

In example embodiments, the window may be determined as a time period in which a set of articles are processed by the production equipment.

In example embodiments, the production equipment may include a mixer configured to manufacture an electrode slurry for a secondary battery.

In example embodiments, the mixer may be configured to stir materials of the electrode slurry, the mixer may be configured to perform a first stirring process of rotating a stirring blade at a first stirring speed to stir the materials and a second stirring process of rotating the stirring blade at a second stirring speed higher than the first stirring speed to stir the materials, and the filtering section may be determined as a section in which the mixer performs the second stirring process.

An aspect of the present invention provides a battery manufacturing method including generating a failure prediction model for production equipment, performing a battery manufacturing process by the production equipment, and monitoring the production equipment based on the failure prediction model, in which the production equipment includes a mixer configured to stir materials in a stirring container by rotating a stirring blade, and the generating of the failure prediction model includes: generating frequency domain data by processing time domain vibration data through frequency analysis, the time domain vibration data being transmitted from a vibration sensor mounted in the production equipment; generating frequency domain-of-interest data by extracting data corresponding to a component-specific frequency band of interest from the frequency domain data; generating production process-related data by determining a filtering section satisfying a process condition of the production equipment and extracting data corresponding to the filtering section from the frequency domain-of-interest data; and generating index data by standardizing the production process-related data.

[Advantageous Effects]

According to example embodiments of the present invention, it is possible to establish a failure prediction model for predicting a failure of production equipment, based on vibration data obtained from a vibration sensor. By monitoring the production equipment based on the failure prediction model, it is possible to predict a failure of the production equipment in advance, diagnose gradual deterioration of the production equipment, and specify a broken component of the production equipment.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

[Brief Description of the Drawings]

FIG. 1 is a block diagram illustrating a manufacturing apparatus according to example embodiments of the present invention.

FIG. 2 is a flowchart of a monitoring method according to example embodiments of the present invention.

FIG. 3 is a block diagram illustrating a failure prediction model generator according to example embodiments of the present invention.

FIG. 4 is a flowchart of a failure prediction model generating method according to example embodiments of the present invention.

FIG. 5A illustrates a first graph showing first frequency domain-of-interest data related to a first component of interest, which is one of a plurality of components, and a second graph showing an enlarged view of a section indicated by "AA" of the first graph.

FIG. 5B illustrates a third graph showing first production process-related data related to the first component of interest, and a fourth graph showing an enlarged view of a section indicated by "AA" of the third graph.

FIG. 5C illustrates a fifth graph showing first index data related to the first component of interest, and a sixth graph showing an enlarged view of a section indicated by "AA" of the fifth graph.

FIG. 6 is a flowchart of a battery manufacturing method according to example embodiments of the present invention.

FIG. 7 is a block diagram illustrating battery manufacturing equipment according to example embodiments of the present invention.

[Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

(First Embodiment)

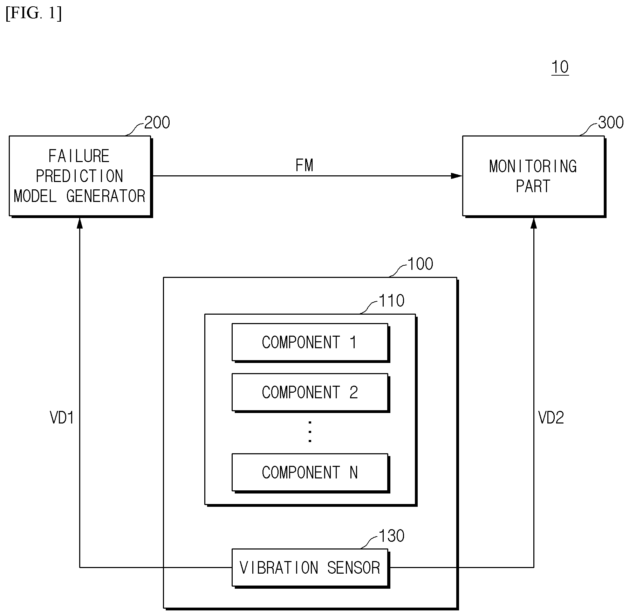

FIG. 1 is a block diagram illustrating a manufacturing apparatus 10 according to example embodiments of the present invention.

Referring to FIG. 1, the manufacturing apparatus 10 may include production equipment 100, a failure prediction model generator 200, and a monitoring part 300.

The production equipment 100 may perform a production process to manufacture an article. The production equipment 100 may include a plurality of components 110 and a vibration sensor 130.

In example embodiments, the production equipment 100 may be embodiment for manufacturing a secondary battery and be configured to manufacture a secondary battery or a component of a secondary battery. In example embodiments, the production equipment 100 may include equipment for manufacturing an electrode slurry for a secondary battery. In exemplary embodiments, the production equipment 100 may include a mixer configured to mix materials (e.g., a conductive additive, a binder, an active material, etc.) constituting the electrode slurry for a secondary battery.

The vibration sensor 130 may be mounted in the production equipment 100 to detect vibration of the production equipment 100 and may generate time domain vibration data VD1 and VD2 obtained at a high sampling rate. The vibration sensor 130 may include an acceleration sensor, a speed sensor, and/or a displacement sensor. The time domain vibration data VD1 and VD2 generated by the vibration sensor 130 may include acceleration data, velocity data, and/or displacement data. The vibration sensor 130 may include a non-contact type sensor and/or a contact type sensor.

The failure prediction model generator 200 may receive and store the vibration data VD1 transmitted from the vibration sensor 130, and generate a failure prediction model FM for predicting a failure of the production equipment 100 and monitoring a state of the production equipment 100 based on the vibration data VD1.

The monitoring part 300 may receive and store the failure prediction model FM transmitted from the failure prediction model generator 200, and receive and store the vibration data VD2 from the production equipment 100. While a production process of an article is performed by the production equipment 100, the monitoring part 300 may monitor the production equipment 100 based on the failure prediction model FM and the vibration data VD2 to predict a failure of the production equipment 100 in advance and specify a component 110 that causes the failure of the production equipment 100.

The monitoring part 300 may include at least one memory device configured to store data, at least one processor configured to process data, and a control panel. For example, the at least one memory device may include a random access memory (RAM) and/or a read-only memory (ROM). The at least one processor may include a central processing unit (CPU), a microprocessor unit (MPU), and/or a graphic processing unit (GPU). The monitoring part 300 may include a computer and/or a server.

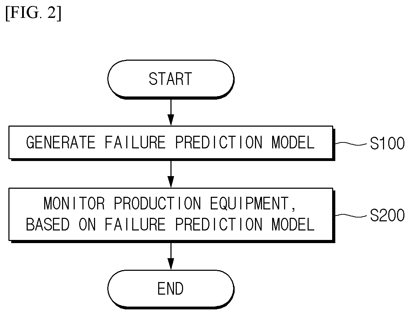

FIG. 2 is a flowchart of a monitoring method according to example embodiments of the present invention.

Referring to FIGS. 1 and 2, the monitoring method according to example embodiments may include generating a failure prediction model FM (S100), and monitoring the production equipment 100 based on the failure prediction model FM (S200).

In the generating of the failure prediction model FM (S100), vibration of the production equipment 100 may be detected by the vibration sensor 130 for a predetermined time while the production equipment 100 is operated to perform a production process of an article, and a failure prediction model FM may be generated based on vibration data VD1 obtained by the vibration sensor 130 for the predetermined time. Operation S100 will be described in detail below.

In the monitoring of the production equipment 100 based on the failure prediction model FM (S200), vibration of the production equipment 100 may be detected by the vibration sensor 130 while the production equipment 100 is operated to perform a production process of an article, and the production equipment 100 may be monitored based on the failure prediction model FM and the vibration data VD2. The monitoring part 300 may predict a failure of the production equipment 100 in advance based on the failure prediction model FM and the vibration data VD2 and specify a component 110 that causes the failure of the production equipment 100.

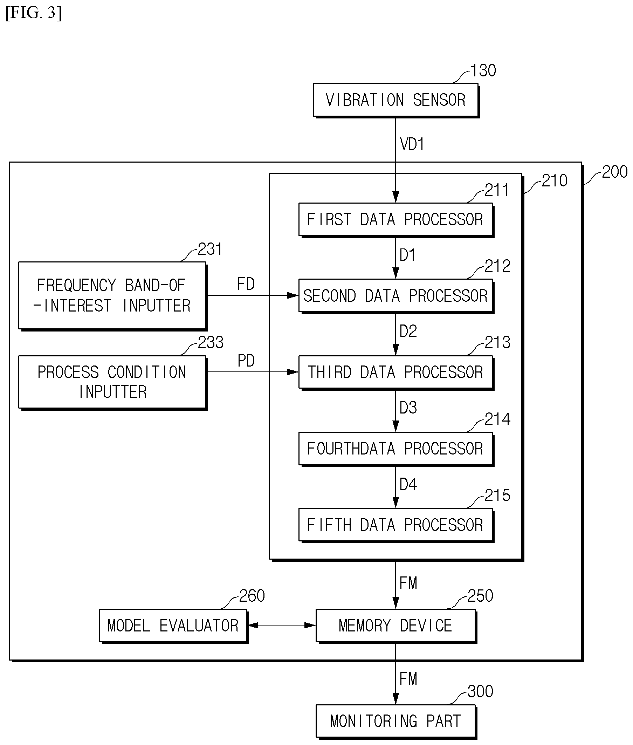

FIG. 3 is a block diagram illustrating the failure prediction model generator 200 according to example embodiments of the present invention.

Referring to FIGS. 1 and 3, the failure prediction model generator 200 may include a data processing part 210 including first to fifth data processors 211, 212, 213, 214 and 215, a frequency band-of-interest inputter 231, a process condition inputter 233, a memory device 250, and a model evaluator 260. The first to fifth data processors 211, 212, 213, 214, and 215 and the model evaluator 260 may each include a processor for processing data, e.g., a CPU, an MPU, or a GPU. The memory device 250 may include an RAM and/or a ROM.

The first data processor 211 may receive time domain vibration data VD1 from the vibration sensor 130 in the production equipment 100, and generate frequency domain data D1 from the time domain vibration data VD1 through frequency analysis. In example embodiments, the first data processor 211 may convert the time domain vibration data VD1 into the frequency domain data D1, based on fast Fourier transform FFT. The frequency domain data D1 may be frequency domain acceleration data or frequency domain velocity data.

In example embodiments, the first data processor 211 may preprocess the time domain vibration data VD1 before the time domain vibration data VD1 is processed based on frequency analysis. For example, when the time domain vibration data VD1 is acceleration data, the first data processor 211 may generate velocity data by integrating the acceleration data.

The second data processor 212 may receive data FD regarding a component-specific frequency band of interest from the frequency band-of-interest inputter 231. The component-specific frequency band of interest may include a plurality of different frequency bands of interest, and each of the plurality of different frequency bands of interest may be related to one of the plurality of components 110 of the production equipment 100. Each of the frequency bands of interest may correspond to a frequency band suitable for investigating a failure of a component of interest selected from among the components 110 of the production equipment 100. In example embodiments, a component of interest of the production equipment 100 may be a rotating part, e.g., a bearing, configured to rotate about a rotary shaft, and a frequency band of interest may include a defect frequency of the rotating part.

The second data processor 212 may extract data corresponding to the component-specific frequency band of interest from the frequency domain data D1 transmitted from the first data processor 211 to generate frequency domain-of-interest data D2. For example, when the production equipment 100 includes a first component of interest and a second component of interest, a first frequency band of interest related to the first component of interest and a second frequency band of interest related to the second component of interest may be different from each other. In this case, the second data processor 212 may generate first frequency domain-of-interest data D2a corresponding to the first frequency band of interest and second frequency domain-of-interest data corresponding to the second frequency band of interest from the frequency domain data D1. The second data processor 212 may extract data corresponding to the component-specific frequency band of interest from the frequency domain data D1 and calculate a statistic from a root mean square (RMS) of the extracted data to generate the frequency domain-of-interest data D2. In this case, a value of each data point of the frequency domain-of-interest data D2 may correspond to the RMS. For example, the second data processor 212 may extract data corresponding to a component-specific frequency band of interest from the frequency domain data D1, and calculate an RMS of each predetermined window for the extracted data. For example, the window may be several to thousands of ms but is not limited thereto.

The third data processor 213 may receive production process data PD of a process condition of the production equipment 100 from the process condition inputter 233. The production process data PD may include data about a production process recipe of the production equipment 100 and/or process data related to the plurality of components 110 of the production equipment 100. For example, the production process data PD may include data such as current, a voltage, pressure, temperature, speed, revolutions per minute (RPM), and the like. The production process data PD may be data obtained at a low sampling rate. For example, the process condition inputter 233 may receive and store production process data PD related to components of interest of the production equipment 100 from the production equipment 100, and transmit the production process data PD to the third data processor 213.

The third data processor 213 may determine a filtering section, based on the production process data PD transmitted from the process condition inputter 233, and extract data **corresponding to** the filtering section from the frequency domain-of-interest data D2 to generate production process-related data D3. The filtering section may be determined based on a process recipe of the production equipment 100. A production condition more suitable for detecting a defect and/or deterioration of a component of interest may be determined, and a time period in which the production equipment 100 is operated under the determined production condition may be the filtering section. In example embodiments, when a component of interest is a rotating part, e.g., a bearing, configured to rotate about a rotary shaft, the filtering section may be determined as a time period in which rpm of the rotating part is within a target rpm range. For example, when the rotating part is configured to operate in a low-rpm mode, an intermediate-rpm mode, or a high-rpm mode, the filtering section may be determined as a time period in which the rotating part operates in the high-rpm mode. In example embodiments, the component of interest may be a rotating component such as a bearing included in a mixer for manufacturing an electrode slurry for a secondary battery.

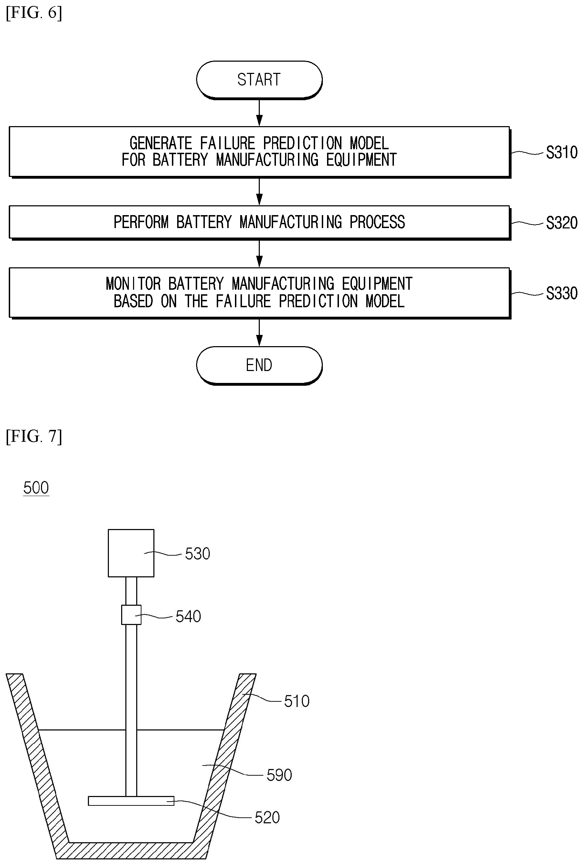

In example embodiments, the production equipment 100 may include a mixer for manufacturing an electrode slurry for a secondary battery. The mixer may include a mixing container 510 of FIG. 7 containing materials (e.g., a solvent, an active material, a conductive additive, and a binder) for manufacturing an electrode slurry, a stirring blade 520 of FIG. 7 for stirring materials in the mixing container 510, a rotation actuator 530 of FIG. 7 for rotating the stirring blade 520, and a bearing 540 of FIG. 7 mounted on a rotary shaft of the stirring blade 520 to rotate in conjunction with the stirring blade 520. In example embodiments, the component of interest may be the bearing 540. The mixer may be configured to perform an input process of putting materials (e.g., a solvent, an active material, a conductive additive, and a binder) for preparing the electrode slurry into the mixing container 510, a first stirring process of stirring the materials in the mixing container 510 while rotating the stirring blade 520 at a first stirring speed, and a second stirring process of stirring the materials in the mixing container 510 at a second stirring speed higher than the first stirring speed. The first stirring process may be a low-speed stirring process of stirring the materials at a relatively low stirring speed (for example, 100 rpm to 500 rpm). The second stirring process may be performed after the first stirring process and be a high-speed stirring process of stirring the materials at a relatively high stirring speed (e.g., 1000 rpm to 2000 rpm). In example embodiments, when the production process-related data D3 is generated by extracting data corresponding to the filtering section from the frequency domain-of-interest data D2, the filtering section may be determined as a time period in which the second stirring process is performed by the mixer, and data obtained from the frequency domain-of-interest data D2 in the time period in which the second stirring process is performed by the mixer may be the production process-related data D3. The third data processor 213 may extract data corresponding to the filtering section from the frequency domain-of-interest data D2, and calculate averages of the extracted data in units of a predetermined window to generate the production process-related data D3. The window may be determined based on the process condition of the production equipment 100. The process condition of the production equipment 100 for determining the filtering section may be different from the process condition of the production equipment 100 for determining the window. For example, when the production equipment 100 is configured to process a set of articles by a production process, the window may be determined as a time period in which the set of articles is processed. For example, in order to generate the production process-related data D3, a window may be determined based on the process condition of the production equipment 100, data corresponding to the filtering section may be extracted from the frequency domain-of-interest data D2, and an operation may be performed to calculate averages of the extracted data in units of the window. For example, when the production equipment 100 is a mixer configured to perform a mixing process to manufacture the electrode slurry, the window may be determined as a time period in which the mixing process is performed on a predetermined amount of the materials of the electrode slurry.

The fourth data processor 214 may generate index data D4 by standardizing the production process-related data D3 transmitted from the third data processor 213. The index data D4 may be obtained by standardizing the production process-related data D3 based on a normal operation state of the production equipment 100. The index data D4 is obtained by standardization and thus may serve as an indicator applicable in common even when there is a sensing deviation between sensors or there is a deviation between equipments. The standardization may include calculating a standard score for the production process-related data D3. In example embodiments, the standardization may include calculating a Z-score for the production process-related data D3. The Z-score may be calculated by Equation (1) below.

$$Z(i) = \frac{(x(i) - \mu)}{\sigma} \quad \text{... Equation (1)}$$

In Equation (1) above, x(i) denotes a value at each data point of the production process-related data D3, $\mu$ denotes an average of normal-state production process-related data generated based on vibration data obtained during normal operation of the production equipment 100, $\sigma$ denotes a standard deviation value of the normal-state production process-related data generated based on the vibration data obtained during the normal operation of the production equipment 100, and Z(i) denotes a Z-score corresponding to each data point of the production process-related data D3.

The fifth data processor 215 may determine a control limit (or threshold) serving as a criterion for judging a failure of the production equipment 100 with respect to the index data D4 transmitted from the fourth data processor 214. When the monitoring part 300 monitors the production equipment 100, the monitoring part 300 may determine that a defect has occurred in a component of the production equipment 100 when a value of index data generated based on the vibration data VD2 obtained from the vibration sensor 130 exceeds the control limit. For example, the determining of the control limit may include determining a control limit for warning notification and a control limit serving as a criterion for failure judgement.

When the control limit for the index data D4 is determined by the fifth data processor 215, the data processing part 210 may output a failure prediction model FM. The data processing part 210 may transmit the failure prediction model FM to the memory device 250, and the memory device 250 may store the failure prediction model FM. The failure prediction model FM stored in the memory device 250 may be provided to the monitoring part 300 through an outputter of the failure prediction model FM.

The model evaluator 260 may evaluate the failure prediction model FM completed by the data processing part 210. The model evaluator 260 may evaluate the failure prediction model FM based on previous data obtained from the vibration sensor 130 of the production equipment 100. For example, after retrieving previous vibration data obtained during a time period during which a failure of the production equipment 100 occurred, the previous vibration data may be applied to the failure prediction model FM to determine whether a failure of the production equipment 100 is detected in advance. Alternatively, after retrieving previous vibration data obtained in a normal operation state of the production equipment 100, the previous vibration data may be applied to the failure prediction model FM to determine whether the production equipment 100 is judged to be in a normal state. When it is determined by the model evaluator 260 that the failure prediction model FM is inappropriate, the data processing part 210 may discard the existing failure prediction model FM and generate a new failure prediction model. If it is determined by the model evaluator 260 that the failure prediction model FM is appropriate, the failure prediction model FM may be provided to the monitoring part 300.

(Second Embodiment)

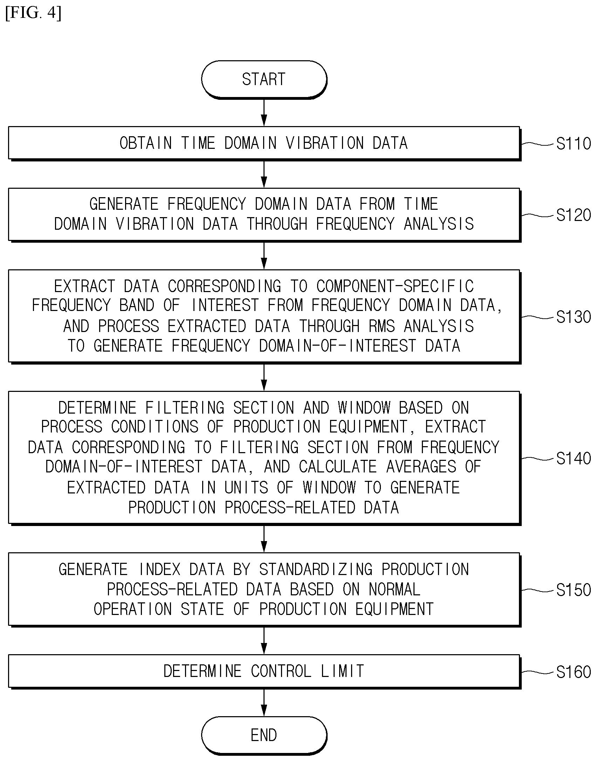

FIG. 4 is a flowchart of a failure prediction model generating method according to example embodiments of the present invention.

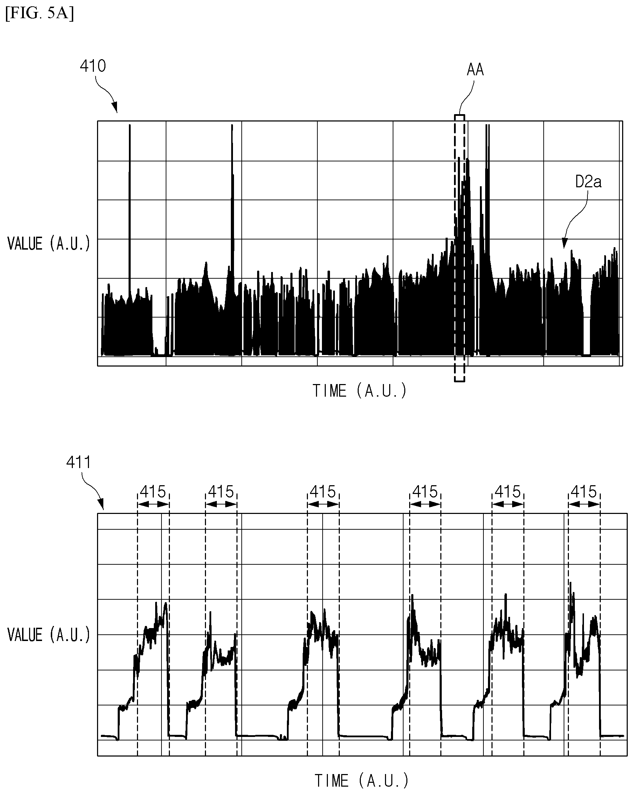

FIG. 5A illustrates a first graph 410 showing first frequency domain-of-interest data D2a related to a first component of interest, which is one of the plurality of components 110, and a second graph 411 showing an enlarged view of a section indicated by "AA" of the first graph 410.

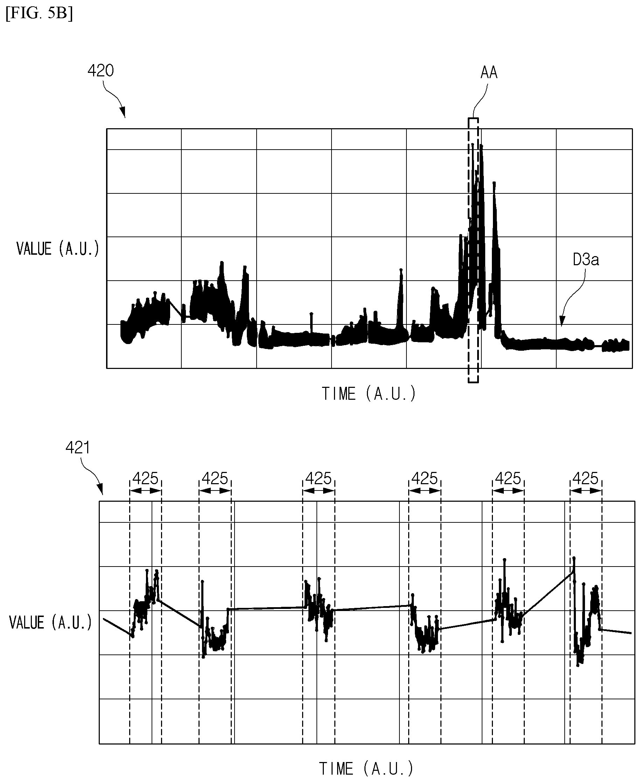

FIG. 5B illustrates a third graph 420 showing first production process-related data D3a related to the first component of interest, and a fourth graph 421 showing an enlarged view of a section indicated by "AA" of the third graph 420.

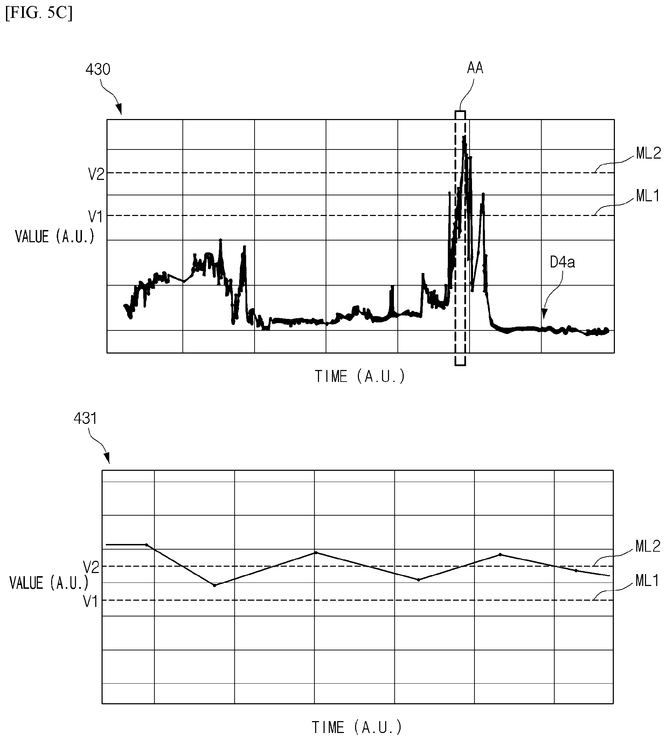

FIG. 5C illustrates a fifth graph 430 showing first index data D4a related to the first component of interest, and a sixth graph 431 showing an enlarged view of a section indicated by "AA" of the fifth graph 430.

Hereinafter, a method of generating a failure prediction model according to example embodiments of the present invention will be described with reference to FIGS. 1 to 3, 4 and 5A to 5C.

First, the production equipment 100 is operated, and time domain vibration data VD1 is obtained for a predetermined time by the vibration sensor 130 in the production equipment 100 (S110). The vibration sensor 130 may transmit the time domain vibration data VD1 to the failure prediction model generator 200.

Next, the first data processor 211 of the failure prediction model generator 200 may process the time domain vibration data VD1 based on FFT to generate frequency domain data D1 (S120).

Next, the second data processor 212 extracts data corresponding to the component-specific frequency band of interest from the frequency domain data D1, and processes the extracted data through RMS analysis to generate frequency domain-of-interest data D2 (S130).

FIG. 5A illustrates the first graph 410 and the second graph 411 showing the first frequency domain of interest data D2a related to the first component of interest. Specifically, the first frequency domain-of-interest data D2a related to the first component of interest may be generated by extracting, from the frequency domain data D1, data corresponding to a first frequency band of interest related to the first component of interest and processing the extracted data through RMS analysis. The first component of interest may correspond to a rotating part (for example, a bearing) with a rotary shaft.

Next, the third data processor 213 determines a filtering section and a window that meet process conditions of the production equipment 100, extracts data corresponding to the filtering section from the frequency domain-of-interest data D2, and calculates averages of the extracted data in units of the window to generate production process-related data D3 (S140).

FIG. 5B illustrates the third graph 420 and the fourth graph 421 showing the first production process-related data D3a generated from the first frequency domain-of-interest data D2a related to the first component of interest. A time period in which the first component of interest is operated at rpm that is in a predetermined target range may be determined as a first filtering section 415 of FIG. 5A. When the production equipment 100 is configured to process a set of articles by a production process, a window 425 may be determined as a time period in which the set of articles is processed. When the first filtering period 415 and the window 425 are determined, the first production process-related data D3a related to the first component of interest may be generated by extracting data corresponding to the first filtering period 415 from the first frequency domain-of-interest data D2a and calculating averages of the extracted data in units of the determined window 425.

Next, the fourth data processor 214 generates index data D4 by standardizing the production process-related data D3 based on a normal operation state of the production equipment 100 (S150). The index data D4 may be generated by calculating a Z-score for the production process-related data D3. Normal-state production process-related data may be obtained based on vibration data obtained in a normal operation state of the production equipment 100, an average and a standard deviation value of the normal-state production process-related data may be calculated, and the Z-score for the production process-related data D3 may be calculated using the average and the standard deviation value of the normal-state production process-related data. The normal-state production process-related data may be obtained through operations substantially the same as operations S110 to S140 described above.

FIG. 5C illustrates the fifth graph 430 and the sixth graph 431 showing the first index data D4a generated from the first frequency domain-of-interest data D2a related to the first component of interest. The first index data D4a related to the first component of interest may be generated by calculating a Z-score for the first production process-related data D3a related to the first component of interest.

Next, a control limit is determined from the index data D4 (S160). The determining of the control limit may include determining a control limit for warning notification and a control limit serving as a criterion for failure judgement.

As illustrated in FIG. 5C, a first control limit ML1 and a second control limit ML2 may be determined with respect to the first index data D4a related to the first component of interest. The first control limit ML1 is related to a case in which a value of the first index data D4a is a first value V1, and the second control limit ML2 is related to a case in which the value of the first index data D4a is a second value V2 greater than the first value V1. When the production equipment 100 is monitored, monitoring index data is generated based on the vibration data VD2, warning notification may be generated when a value of the monitoring index data is between the first value V1 of the first control limit ML1 and the second value V2 of the second control limit ML2, and failure notification may be generated when the value of the monitoring index data exceeds the second value V2 of the second control limit ML2. The monitoring index data may be obtained through operations substantially the same as operations S110 to S150 described above.

When the determining of the control limit of the index data D4 is completed, the failure prediction model generator 200 may generate and store a failure prediction model FM. The model evaluator 260 may evaluate suitability of the failure prediction model FM using previous data, and the failure prediction model FM when passing suitability evaluation of the model evaluator 260 may be provided to the monitoring part 300. The monitoring part 300 may monitor the production equipment 100 based on the failure prediction model FM.

According to example embodiments of the present invention, it is possible to establish the failure prediction model FM for predicting a failure of the production equipment 100, based on the vibration data VD1 obtained from the vibration sensor 130. By monitoring the production equipment 100 based on the failure prediction model FM, a failure of the production equipment 100 can be predicted in advance, gradual deterioration of the production equipment 100 can be diagnosed, and a broken component of the production equipment 100 can be specified.

(Third Embodiment)

FIG. 6 is a flowchart of a battery manufacturing method according to example embodiments of the present invention. FIG. 7 is a block diagram illustrating battery manufacturing equipment 500 according to example embodiments of the present invention. Hereinafter, a battery manufacturing method according to example embodiments will be described with reference to FIGS. 1 to 7.

The battery manufacturing method according to example embodiments may include generating a failure prediction model FM for the battery manufacturing equipment 500 (S310), performing a battery manufacturing process (S320), and monitoring the battery manufacturing equipment 500 based on the failure prediction model FM (S330). The battery manufacturing equipment 500 may correspond to the production equipment 100 of FIG. 1.

In operation S310, while the battery manufacturing equipment 500 is operated to perform the battery manufacturing process, vibration of the battery manufacturing equipment 500 may be detected by the vibration sensor 130 for a predetermined time, and the failure prediction model FM may be generated based on vibration data VD1 obtained by the vibration sensor 130 for the predetermined time. Operation S310 may include operations S110 to S160 described above with reference to FIG. 4.

In example embodiments, the battery manufacturing equipment 500 may include a mixer configured to perform a mixing process of manufacturing an electrode slurry for a secondary battery. The mixer may include the mixing container 510 containing materials 590 (e.g., a solvent, an active material, a conductive additive, and a binder) for manufacturing the electrode slurry, the stirring blade 520 that stirs the materials 590 in the mixing container 510, the rotation actuator 530 that rotates the stirring blade 520, and the bearing 540 mounted on a rotary shaft of the stirring blade 520 to rotate in conjunction with the stirring blade 520.

The mixer may be configured to perform an input process of putting the materials 590 for manufacturing the electrode slurry into the mixing container 510, a first stirring process of stirring the materials 590 in the mixing container 510 while rotating the stirring blade 520 at a first stirring speed, and a second stirring process of stirring the materials 590 in the mixing container 510 at a second stirring speed higher than the first stirring speed. The first stirring process may be a low-speed stirring process of stirring the materials 590 at a relatively low stirring speed (for example, 100 rpm to 500 rpm). The second stirring process may be performed after the first stirring process and be a high-speed stirring process of stirring the materials 590 at a relatively high stirring speed (e.g., 1000 rpm to 2000 rpm). In example embodiments, in operation S140, when the data corresponding to the filtering section is extracted from the frequency domain-of-interest data D2 to generate the production process-related data D3, the filtering section may be determined as a section in which the mixer performs the second stirring process.

In operation S320, the battery manufacturing equipment 500 is operated to perform the battery manufacturing process. The battery manufacturing process may include a mixing process using the mixer.

In operation S330, vibration of the mixer may be detected by the vibration sensor 130 while the mixer performs the mixing process, and the battery manufacturing equipment 500 may be monitored based on the failure prediction model FM and vibration data VD2. The monitoring part 300 may predict a failure of the mixer in advance, based on the failure prediction model FM and the vibration data VD2, and specify a component 110 that causes a failure of the battery manufacturing equipment 500.

According to example embodiments of the present invention, it is possible to establish the failure prediction model FM for predicting a failure of the battery manufacturing equipment 500 configured to perform the battery manufacturing process, based on the vibration data VD1 obtained from the vibration sensor 130. By monitoring the battery manufacturing equipment 500 based on the failure prediction model FM, a failure of the battery manufacturing equipment 500 can be predicted in advance, gradual deterioration of the battery manufacturing equipment 500 can be diagnosed, and a broken component of the battery manufacturing equipment 500 can be specified.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A monitoring method comprising:

    generating a failure prediction model for production equipment; and
    monitoring the production equipment based on the failure prediction model,
    wherein the generating of the failure prediction model comprises:

    generating frequency domain data by processing time domain vibration data through frequency analysis, the time domain vibration data being transmitted from a vibration sensor in the production equipment;
    generating frequency domain-of-interest data by extracting data corresponding to a component-specific frequency band of interest from the frequency domain data;
    generating production process-related data by determining a filtering section satisfying a process condition of the production equipment and extracting data corresponding to the filtering section from the frequency domain-of-interest data; and
    generating index data by standardizing the production process-related data.

2. The monitoring method of claim 1, wherein the frequency domain data is generated by processing time domain acceleration data or time domain velocity data through Fast Fourier Transform.

3. The monitoring method of claim 1, wherein the frequency domain-of-interest data is generated by extracting data corresponding to a component-specific frequency band of interest from the frequency domain data and calculating a statistic using a root mean square of the extracted data.

4. The monitoring method of claim 1, wherein the filtering section is determined as a section in which revolutions per minute of a component of the production equipment is in a target range.

5. The monitoring method of claim 1, wherein the production process-related data is generated by extracting data corresponding to the filtering section from the frequency domain-of-interest data and calculating averages of the extracted data in units of a window determined based on another process condition of the production equipment.

6. The monitoring method of claim 5, wherein the window is determined as a time period in which a set of articles are processed by the production equipment.

7. The monitoring method of claim 1, wherein the generating of the index data comprises calculating a Z-score for the production process-related data.

8. The monitoring method of claim 1, further comprising determining a control limit serving as a criterion for judging whether the production equipment is broken, based on the index data.

9. The monitoring method of claim 1, further comprising evaluating the failure prediction model after the generating of the failure prediction model.

10. The monitoring method of claim 1, wherein the vibration sensor comprises an acceleration sensor.

11. The monitoring method of claim 1, wherein the production equipment comprises a mixer configured to manufacture an electrode slurry for a secondary battery.

12. The monitoring method of claim 11, wherein

the mixer is configured to stir materials of the electrode slurry,
wherein the mixer is configured to perform a first stirring process of rotating a stirring blade at a first stirring speed to stir the materials and a second stirring process of rotating the stirring blade at a second stirring speed higher than the first stirring speed to stir the materials, and
the filtering section is determined as a section in which the mixer performs the second stirring process.

13. A method of generating a failure prediction model for production equipment, the method comprising:

generating frequency domain data by processing time domain vibration data through frequency analysis, the time domain vibration data being transmitted from a vibration sensor in the production equipment;
generating frequency domain-of-interest data by extracting data corresponding to a component-specific frequency band of interest from the frequency domain data and calculating a statistic using a root mean square of the extracted data;
generating production process-related data by extracting data corresponding to a filtering section from the frequency domain-of-interest data and calculating averages of the extracted data in units of a window, wherein the filtering section is determined based on a process condition of the production equipment and the window is determined based on another process condition of the production equipment;
generating index data by calculating a standard score for the production process-related data; and
determining a control limit serving as a criterion for judging whether the production equipment is broken, based on the index data.

14. The method of claim 13, wherein the filtering section is determined as a section in which revolutions per minute of a component of the production equipment is in a target range.

15. The method of claim 13, wherein the window is determined as a time period in which a set of articles are processed by the production equipment.

16. The method of claim 13, wherein the production equipment comprises a mixer configured to manufacture an electrode slurry for a secondary battery.

17. The method of claim 16, wherein

the mixer is configured to stir materials of the electrode slurry,
wherein the mixer is configured to perform a first stirring process of rotating a stirring blade at a first stirring speed to stir the materials and a second stirring process of rotating the stirring blade at a second stirring speed higher than the first stirring speed to stir the materials, and
the filtering section is determined as a section in which the mixer performs the second stirring process.

18. A battery manufacturing method comprising:

generating a failure prediction model for production equipment;
performing a battery manufacturing process by the production equipment; and
monitoring the production equipment based on the failure prediction model,
wherein the production equipment comprises a mixer configured to stir materials in a stirring container by rotating a stirring blade, and
the generating of the failure prediction model comprises:

generating frequency domain data by processing time domain vibration data through frequency analysis, the time domain vibration data being transmitted from a vibration sensor mounted in the production equipment;
generating frequency domain-of-interest data by extracting data corresponding to a component-specific frequency band of interest from the frequency domain data;
generating production process-related data by determining a filtering section satisfying a process condition of the production equipment and extracting data corresponding to the filtering section from the frequency domain-of-interest data; and
generating index data by standardizing the production process-related data.

[FIG. 1]

<u>10</u>

```
  ┌─────────────────┐                              ┌─────────────┐
  │    ┌200          │              FM              │    ┌300     │
  │     FAILURE      │ ─────────────────────────▶   │ MONITORING  │
  │   PREDICTION     │                              │    PART     │
  │ MODEL GENERATOR  │                              │             │
  └─────────────────┘                              └─────────────┘
          ▲                                               ▲
          │                                               │
      VD1 │                                           VD2 │
          │         ┌─────────────────────────┐          │
          │         │                    ┌100  │          │
          │         │   ┌──────────────┐ ┌110  │          │
          │         │   │  COMPONENT 1 │      │          │
          │         │   └──────────────┘      │          │
          │         │   ┌──────────────┐      │          │
          │         │   │  COMPONENT 2 │      │          │
          │         │   └──────────────┘      │          │
          │         │          ┊              │          │
          │         │   ┌──────────────┐      │          │
          │         │   │  COMPONENT N │      │          │
          │         │   └──────────────┘      │          │
          │         │                    ┌130  │          │
          │         │  ┌──────────────────┐    │          │
          └─────────┼──│ VIBRATION SENSOR │────┼──────────┘
                    │  └──────────────────┘    │
                    └─────────────────────────┘
```

[FIG. 2]

```
        ┌─────────────────┐
        │      START      │
        └─────────────────┘
                 │
                 ▼
┌──────────────────────────────────────┐
│  GENERATE FAILURE PREDICTION MODEL    │──── S100
└──────────────────────────────────────┘
                 │
                 ▼
┌──────────────────────────────────────┐
│     MONITOR PRODUCTION EQUIPMENT,     │──── S200
│  BASED ON FAILURE PREDICTION MODEL    │
└──────────────────────────────────────┘
                 │
                 ▼
        ┌─────────────────┐
        │       END       │
        └─────────────────┘
```

[FIG. 3]

[FIG. 4]

```
                    ┌─────────────────┐
                    │      START      │
                    └─────────────────┘
                             │
                             ▼
      ┌──────────────────────────────────────────────┐
      │     OBTAIN TIME DOMAIN VIBRATION DATA         │──── S110
      └──────────────────────────────────────────────┘
                             │
                             ▼
      ┌──────────────────────────────────────────────┐
      │      GENERATE FREQUENCY DOMAIN DATA FROM TIME │──── S120
      │  DOMAIN VIBRATION DATA THROUGH FREQUENCY      │
      │  ANALYSIS                                     │
      └──────────────────────────────────────────────┘
                             │
                             ▼
      ┌──────────────────────────────────────────────┐
      │   EXTRACT DATA CORRESPONDING TO COMPONENT-    │
      │   SPECIFIC FREQUENCY BAND OF INTEREST FROM    │──── S130
      │   FREQUENCY DOMAIN DATA, AND PROCESS          │
      │   EXTRACTED DATA THROUGH RMS ANALYSIS         │
      │   TO GENERATE FREQUENCY DOMAIN-OF-INTEREST    │
      │   DATA                                        │
      └──────────────────────────────────────────────┘
                             │
                             ▼
      ┌──────────────────────────────────────────────┐
      │   DETERMINE FILTERING SECTION AND WINDOW      │
      │   BASED ON PROCESS CONDITIONS OF PRODUCTION   │
      │   EQUIPMENT, EXTRACT DATA CORRESPONDING TO    │──── S140
      │   FILTERING SECTION FROM FREQUENCY DOMAIN-    │
      │   OF-INTEREST DATA, AND CALCULATE AVERAGES    │
      │   OF EXTRACTED DATA IN UNITS OF WINDOW TO     │
      │   GENERATE PRODUCTION PROCESS-RELATED DATA    │
      └──────────────────────────────────────────────┘
                             │
                             ▼
      ┌──────────────────────────────────────────────┐
      │   GENERATE INDEX DATA BY STANDARDIZING        │
      │   PRODUCTION PROCESS-RELATED DATA BASED ON    │──── S150
      │   NORMAL OPERATION STATE OF PRODUCTION        │
      │   EQUIPMENT                                   │
      └──────────────────────────────────────────────┘
                             │
                             ▼
      ┌──────────────────────────────────────────────┐
      │          DETERMINE CONTROL LIMIT             │──── S160
      └──────────────────────────────────────────────┘
                             │
                             ▼
                    ┌─────────────────┐
                    │       END       │
                    └─────────────────┘
```

[FIG. 5A]

[FIG. 5B]

[FIG. 5C]

[FIG. 6]

```
                    ┌──────────────┐
                    │    START     │
                    └──────┬───────┘
                           │
                           ▼
    ┌──────────────────────────────────────────────┐
    │   GENERATE FAILURE PREDICTION MODEL           │── S310
    │   FOR BATTERY MANUFACTURING EQUIPMENT         │
    └──────────────────────┬───────────────────────┘
                           │
                           ▼
    ┌──────────────────────────────────────────────┐
    │   PERFORM BATTERY MANUFACTURING PROCESS       │── S320
    └──────────────────────┬───────────────────────┘
                           │
                           ▼
    ┌──────────────────────────────────────────────┐
    │   MONITOR BATTERY MANUFACTURING EQUIPMENT     │── S330
    │   BASED ON THE FAILURE PREDICTION MODEL       │
    └──────────────────────┬───────────────────────┘
                           │
                           ▼
                    ┌──────────────┐
                    │     END      │
                    └──────────────┘
```

[FIG. 7]

## INTERNATIONAL SEARCH REPORT

| International application No. |
| --- |
| **PCT/KR2024/018720** |

**A. CLASSIFICATION OF SUBJECT MATTER**

**G05B 23/02**(2006.01)i; **H01M 4/139**(2010.01)i

According to International Patent Classification (IPC) or to both national classification and IPC

**B. FIELDS SEARCHED**

Minimum documentation searched (classification system followed by classification symbols)

G05B 23/02(2006.01); G01H 11/06(2006.01); G05B 19/05(2006.01); G06N 20/00(2019.01); G06N 3/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: failure prediction model, vibration sensor, frequency area, filtering section, process conditions, index data, mixer, battery manufacturing process, blade

**C. DOCUMENTS CONSIDERED TO BE RELEVANT**

| Category* | Citation of document, with indication, where appropriate, of the relevant passages | Relevant to claim No. |
| --- | --- | --- |
| A | US 2020-0096987 A1 (STRONG FORCE IOT PORTFOLIO 2016, LLC) 26 March 2020 (2020-03-26)<br>See paragraph [1098]; and claims 1-2. | 1-18 |
| A | KR 10-2021-0097369 A (EMFOCUS) 09 August 2021 (2021-08-09)<br>See paragraphs [0114]-[0127]; and figure 2. | 1-18 |
| A | KR 10-2020-0077475 A (ASTINTERNATIONAL CO., LTD.) 30 June 2020 (2020-06-30)<br>See paragraphs [0077]-[0082]; and figure 4. | 1-18 |
| A | KR 10-2021-0061517 A (KOREA INSTITUTE OF INDUSTRIAL TECHNOLOGY) 28 May 2021 (2021-05-28)<br>See paragraphs [0065]-[0067]; and claims 1-7. | 1-18 |
| A | KR 10-2022-0102364 A (TELSTAR-HOMMEL CORP.) 20 July 2022 (2022-07-20)<br>See paragraphs [0023]-[0039]; and claim 1. | 1-18 |

☐ Further documents are listed in the continuation of Box C.  ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 February 2025** | **04 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/018720** |

| Patent document cited in search report | | | Publication date (day/month/year) | Patent family member(s) | | | Publication date (day/month/year) |
| --- | --- | --- | --- | --- | --- | --- | --- |
| US | 2020-0096987 | A1 | 26 March 2020 | US | 10712738 | B2 | 14 July 2020 |
| | | | | US | 10732621 | B2 | 04 August 2020 |
| | | | | US | 10754334 | B2 | 25 August 2020 |
| | | | | US | 10866584 | B2 | 15 December 2020 |
| | | | | US | 10983514 | B2 | 20 April 2021 |
| | | | | US | 11003179 | B2 | 11 May 2021 |
| | | | | US | 11009865 | B2 | 18 May 2021 |
| | | | | US | 11029680 | B2 | 08 June 2021 |
| | | | | US | 11048248 | B2 | 29 June 2021 |
| | | | | US | 11054817 | B2 | 06 July 2021 |
| | | | | US | 11073826 | B2 | 27 July 2021 |
| | | | | US | 11086311 | B2 | 10 August 2021 |
| | | | | US | 11092955 | B2 | 17 August 2021 |
| | | | | US | 11106199 | B2 | 31 August 2021 |
| | | | | US | 11112784 | B2 | 07 September 2021 |
| | | | | US | 11112785 | B2 | 07 September 2021 |
| | | | | US | 11119473 | B2 | 14 September 2021 |
| | | | | US | 11126171 | B2 | 21 September 2021 |
| | | | | US | 11137752 | B2 | 05 October 2021 |
| | | | | US | 11156998 | B2 | 26 October 2021 |
| | | | | US | 11169511 | B2 | 09 November 2021 |
| | | | | US | 11181893 | B2 | 23 November 2021 |
| | | | | US | 11194318 | B2 | 07 December 2021 |
| | | | | US | 11194319 | B2 | 07 December 2021 |
| | | | | US | 11353850 | B2 | 07 June 2022 |
| | | | | US | 11353851 | B2 | 07 June 2022 |
| | | | | US | 11353852 | B2 | 07 June 2022 |
| | | | | US | 11360459 | B2 | 14 June 2022 |
| | | | | US | 11366455 | B2 | 21 June 2022 |
| | | | | US | 11366456 | B2 | 21 June 2022 |
| | | | | US | 11372394 | B2 | 28 June 2022 |
| | | | | US | 11372395 | B2 | 28 June 2022 |
| | | | | US | 11378938 | B2 | 05 July 2022 |
| | | | | US | 11385622 | B2 | 12 July 2022 |
| | | | | US | 11385623 | B2 | 12 July 2022 |
| | | | | US | 11392109 | B2 | 19 July 2022 |
| | | | | US | 11392111 | B2 | 19 July 2022 |
| | | | | US | 11397421 | B2 | 26 July 2022 |
| | | | | US | 11397422 | B2 | 26 July 2022 |
| | | | | US | 11402826 | B2 | 02 August 2022 |
| | | | | US | 11409266 | B2 | 09 August 2022 |
| | | | | US | 11493903 | B2 | 08 November 2022 |
| | | | | US | 11507064 | B2 | 22 November 2022 |
| | | | | US | 11507075 | B2 | 22 November 2022 |
| | | | | US | 11573557 | B2 | 07 February 2023 |
| | | | | US | 11573558 | B2 | 07 February 2023 |
| | | | | US | 11586181 | B2 | 21 February 2023 |
| | | | | US | 11586188 | B2 | 21 February 2023 |
| | | | | US | 11609552 | B2 | 21 March 2023 |
| | | | | US | 11609553 | B2 | 21 March 2023 |

Form PCT/ISA/210 (patent family annex) (July 2022)

## INTERNATIONAL SEARCH REPORT
### Information on patent family members

| International application No. |
|---|
| **PCT/KR2024/018720** |

| Patent document cited in search report | Publication date (day/month/year) | Patent family member(s) | | | Publication date (day/month/year) |
|---|---|---|---|---|---|
| | | US | 11646808 | B2 | 09 May 2023 |
| | | US | 11728910 | B2 | 15 August 2023 |
| | | US | 11770196 | B2 | 26 September 2023 |
| | | US | 11791914 | B2 | 17 October 2023 |
| | | US | 11838036 | B2 | 05 December 2023 |
| | | US | 11996900 | B2 | 28 May 2024 |
| | | US | 12191926 | B2 | 07 January 2025 |
| | | US | 2018-0284735 | A1 | 04 October 2018 |
| | | US | 2018-0284736 | A1 | 04 October 2018 |
| | | US | 2018-0284737 | A1 | 04 October 2018 |
| | | US | 2018-0284741 | A1 | 04 October 2018 |
| | | US | 2018-0284742 | A1 | 04 October 2018 |
| | | US | 2018-0284743 | A1 | 04 October 2018 |
| | | US | 2018-0284744 | A1 | 04 October 2018 |
| | | US | 2018-0284745 | A1 | 04 October 2018 |
| | | US | 2018-0284746 | A1 | 04 October 2018 |
| | | US | 2018-0284747 | A1 | 04 October 2018 |
| | | US | 2018-0284749 | A1 | 04 October 2018 |
| | | US | 2018-0284752 | A1 | 04 October 2018 |
| | | US | 2018-0284753 | A1 | 04 October 2018 |
| | | US | 2018-0284754 | A1 | 04 October 2018 |
| | | US | 2018-0284755 | A1 | 04 October 2018 |
| | | US | 2018-0284756 | A1 | 04 October 2018 |
| | | US | 2018-0284757 | A1 | 04 October 2018 |
| | | US | 2018-0284758 | A1 | 04 October 2018 |
| | | US | 2018-0299878 | A1 | 18 October 2018 |
| | | US | 2018-0321666 | A1 | 08 November 2018 |
| | | US | 2018-0321667 | A1 | 08 November 2018 |
| | | US | 2018-0321672 | A1 | 08 November 2018 |
| | | US | 2019-0025805 | A1 | 24 January 2019 |
| | | US | 2019-0025806 | A1 | 24 January 2019 |
| | | US | 2019-0025812 | A1 | 24 January 2019 |
| | | US | 2019-0033845 | A1 | 31 January 2019 |
| | | US | 2019-0033846 | A1 | 31 January 2019 |
| | | US | 2019-0033847 | A1 | 31 January 2019 |
| | | US | 2019-0033848 | A1 | 31 January 2019 |
| | | US | 2019-0033849 | A1 | 31 January 2019 |
| | | US | 2019-0041836 | A1 | 07 February 2019 |
| | | US | 2019-0041840 | A1 | 07 February 2019 |
| | | US | 2019-0041841 | A1 | 07 February 2019 |
| | | US | 2019-0041843 | A1 | 07 February 2019 |
| | | US | 2019-0041844 | A1 | 07 February 2019 |
| | | US | 2019-0041845 | A1 | 07 February 2019 |
| | | US | 2019-0041846 | A1 | 07 February 2019 |
| | | US | 2019-0064792 | A1 | 28 February 2019 |
| | | US | 2019-0121339 | A1 | 25 April 2019 |
| | | US | 2019-0121340 | A1 | 25 April 2019 |
| | | US | 2019-0121342 | A1 | 25 April 2019 |
| | | US | 2019-0121343 | A1 | 25 April 2019 |
| | | US | 2019-0121344 | A1 | 25 April 2019 |

Form PCT/ISA/210 (patent family annex) (July 2022)

## INTERNATIONAL SEARCH REPORT
### Information on patent family members

| | International application No. |
|---|---|
| | **PCT/KR2024/018720** |

| Patent document<br>cited in search report | Publication date<br>(day/month/year) | Patent family member(s) | | | Publication date<br>(day/month/year) |
|---|---|---|---|---|---|
| | | US | 2019-0121345 | A1 | 25 April 2019 |
| | | US | 2019-0121346 | A1 | 25 April 2019 |
| | | US | 2019-0121347 | A1 | 25 April 2019 |
| | | US | 2019-0121349 | A1 | 25 April 2019 |
| | | US | 2019-0129404 | A1 | 02 May 2019 |
| | | US | 2019-0129405 | A1 | 02 May 2019 |
| | | US | 2019-0129406 | A1 | 02 May 2019 |
| | | US | 2019-0129408 | A1 | 02 May 2019 |
| | | US | 2019-0129409 | A1 | 02 May 2019 |
| | | US | 2019-0137985 | A1 | 09 May 2019 |
| | | US | 2019-0137987 | A1 | 09 May 2019 |
| | | US | 2019-0137988 | A1 | 09 May 2019 |
| | | US | 2019-0137989 | A1 | 09 May 2019 |
| | | US | 2019-0146474 | A1 | 16 May 2019 |
| | | US | 2019-0146476 | A1 | 16 May 2019 |
| | | US | 2019-0146477 | A1 | 16 May 2019 |
| | | US | 2019-0146481 | A1 | 16 May 2019 |
| | | US | 2019-0146482 | A1 | 16 May 2019 |
| | | US | 2019-0155272 | A1 | 23 May 2019 |
| | | US | 2019-0179300 | A1 | 13 June 2019 |
| | | US | 2019-0179301 | A1 | 13 June 2019 |
| | | US | 2019-0187680 | A1 | 20 June 2019 |
| | | US | 2019-0187681 | A1 | 20 June 2019 |
| | | US | 2019-0187682 | A1 | 20 June 2019 |
| | | US | 2019-0187683 | A1 | 20 June 2019 |
| | | US | 2019-0187684 | A1 | 20 June 2019 |
| | | US | 2019-0187685 | A1 | 20 June 2019 |
| | | US | 2019-0187686 | A1 | 20 June 2019 |
| | | US | 2019-0187687 | A1 | 20 June 2019 |
| | | US | 2019-0187688 | A1 | 20 June 2019 |
| | | US | 2019-0187689 | A1 | 20 June 2019 |
| | | US | 2019-0187690 | A1 | 20 June 2019 |
| | | US | 2019-0219995 | A1 | 18 July 2019 |
| | | US | 2019-0219996 | A1 | 18 July 2019 |
| | | US | 2019-0227536 | A1 | 25 July 2019 |
| | | US | 2019-0227537 | A1 | 25 July 2019 |
| | | US | 2019-0339684 | A1 | 07 November 2019 |
| | | US | 2019-0339685 | A1 | 07 November 2019 |
| | | US | 2019-0339686 | A1 | 07 November 2019 |
| | | US | 2019-0339687 | A1 | 07 November 2019 |
| | | US | 2020-0019154 | A1 | 16 January 2020 |
| | | US | 2020-0019155 | A1 | 16 January 2020 |
| | | US | 2020-0026270 | A1 | 23 January 2020 |
| | | US | 2020-0096986 | A1 | 26 March 2020 |
| | | US | 2020-0096988 | A1 | 26 March 2020 |
| | | US | 2020-0096989 | A1 | 26 March 2020 |
| | | US | 2020-0096990 | A1 | 26 March 2020 |
| | | US | 2020-0096992 | A1 | 26 March 2020 |
| | | US | 2020-0096993 | A1 | 26 March 2020 |
| | | US | 2020-0096994 | A1 | 26 March 2020 |

Form PCT/ISA/210 (patent family annex) (July 2022)

**INTERNATIONAL SEARCH REPORT**
**Information on patent family members**

International application No.

**PCT/KR2024/018720**

| Patent document<br>cited in search report | | | Publication date<br>(day/month/year) | Patent family member(s) | | | Publication date<br>(day/month/year) |
|---|---|---|---|---|---|---|---|
| | | | | US | 2020-0096995 | A1 | 26 March 2020 |
| | | | | US | 2020-0096996 | A1 | 26 March 2020 |
| | | | | US | 2020-0096997 | A1 | 26 March 2020 |
| | | | | US | 2020-0096998 | A1 | 26 March 2020 |
| | | | | US | 2020-0103890 | A1 | 02 April 2020 |
| | | | | US | 2020-0103891 | A1 | 02 April 2020 |
| | | | | US | 2020-0103892 | A1 | 02 April 2020 |
| | | | | US | 2020-0103893 | A1 | 02 April 2020 |
| | | | | US | 2020-0110398 | A1 | 09 April 2020 |
| | | | | US | 2020-0110399 | A1 | 09 April 2020 |
| | | | | US | 2020-0110400 | A1 | 09 April 2020 |
| | | | | US | 2020-0110401 | A1 | 09 April 2020 |
| | | | | US | 2020-0117180 | A1 | 16 April 2020 |
| KR | 10-2021-0097369 | A | 09 August 2021 | KR | 10-2373787 | B1 | 14 March 2022 |
| KR | 10-2020-0077475 | A | 30 June 2020 | KR | 10-2019-0129258 | A | 20 November 2019 |
| | | | | KR | 10-2316630 | B1 | 25 October 2021 |
| KR | 10-2021-0061517 | A | 28 May 2021 | KR | 10-2265298 | B1 | 17 June 2021 |
| KR | 10-2022-0102364 | A | 20 July 2022 | KR | 10-2433483 | B1 | 18 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230167381

- KR 1020240105841